# EUROPÄISCHE PATENTSCHRIFT

(11) **EP 4 288 643 B1**
(45) Veröffentlichungstag und Bekanntmachung des Hinweises auf die Patenterteilung: **04.06.2025**
(21) Anmeldenummer: 22721711.4
(22) Anmeldetag: 08.04.2022
(51) Int. Cl.: F01K 23/10, F01K 25/00, F22B 1/00, F22G 5/12

(54) **ERZEUGUNG VON ELEKTRISCHER ENERGIE AUS WASSERSTOFF UND SAUERSTOFF**
GENERATING ELECTRICAL ENERGY FROM HYDROGEN AND OXYGEN
PRODUCTION D'ÉNERGIE ÉLECTRIQUE À PARTIR D'HYDROGÈNE ET D'OXYGÈNE

(30) Priorität: 15.04.2021 DE 102021203730
(43) Veröffentlichungstag der Anmeldung: 13.12.2023
(73) Patentinhaber: Siemens Energy Global GmbH & Co. KG, 91058 Erlangen (DE)
(72) Erfinder: JURETZEK, Uwe, 91058 Erlangen (DE); GRAEBER, Carsten, 91056 Erlangen (DE)
(86) Internationale Anmeldenummer: PCT/EP2022/059372
(87) Internationale Veröffentlichungsnummer: WO 2022/218841

(56) Entgegenhaltungen:
- DE-A1- 102010 035 487
- US-A- 5 755 089
- US-A1- 2019 390 577

## Beschreibung

Die Erfindung betrifft eine Vorrichtung und ein Verfahren zum Erzeugen von elektrischer Energie aus Wasserstoff und Sauerstoff.

In konventionellen Kraftwerken werden fossile Brennstoffe wie Kohle oder Kohlenwasserstoffe verbrannt, wodurch Kohlendioxid (CO₂) in die Atmosphäre freigesetzt wird. International ist es inzwischen politisches Ziel, konventionelle Kraftwerke zukünftig durch saubere Kraftwerke zu ersetzen, die am besten gar kein CO₂ als Verbrennungsprodukt aufweisen, und auch frei von weiteren Emissionen wie beispielsweise Stickoxide sein sollen.

Wasserstoff (H₂) ist dabei im Fokus der Entwicklung, da bei der Verbrennung von Wasserstoff kein Kohlendioxid (CO₂) als Reaktionsprodukt anfällt. Ob Wasserstoff jedoch als weitgehend CO₂-neutraler Brennstoff betrachtet werden kann, hängt von der Art der Erzeugung ab. Wasserstoff, der über Wasserelektrolyse mit Hilfe von erneuerbaren Energien hergestelltem Strom erzeugt wird, kommt ohne CO₂-Emissionen aus und wird gebräuchlich als grüner Wasserstoff bezeichnet. Die Herstellung von CO₂-neutralem Wasserstoff ist in jedem Fall aufwendig und teuer.

Wasserstoff wird auch in alternativen Szenarien wie beispielsweise bei der Ammoniaksynthese und nachfolgende Düngemittelproduktion benötigt. Die Nachfrage nach CO₂-neutralem Wasserstoff ist groß und wird in Zukunft weiter zunehmen. Das Angebot hingegen ist knapp und wird auch in Zukunft ein knappes Gut sein. Ein Kraftwerk, welches Wasserstoff zur Erzeugung elektrischer Energie nutzt, wird einen hohen Wirkungsgrad aufweisen müssen, um wirtschaftlich betrieben werden zu können.

Es ist davon auszugehen, dass in Zukunft elektrische Energie weitgehend aus regenerativen Quellen wie Sonne und Wind erzeugt werden wird. Dabei werden konventionelle Kraftwerke vor allem noch dann zum Einsatz kommen müssen, wenn regenerative Energien nicht in ausreichendem Maß zur Verfügung stehen. Für ein konventionelles Kraftwerk bedeutet dies, dass die Anzahl der möglichen Betriebsstunden stark eingeschränkt sein wird. Folglich wird ein solches Kraftwerk zu günstigen spezifischen Investitionskosten nachgefragt sein.

Bekannt sind bereits Verbrennungskraftmaschinen, wie beispielsweise Gasturbinen oder Gasmotoren, in denen Wasserstoff bzw. ein Gemisch aus Wasserstoff und Erdgas mit Luft zur Stromerzeugung verbrannt werden. Mit diesen Verbrennungskraftmaschinen sind auch Kraftwerkskonzepte realisierbar, welche auch die Abgaswärme der Verbrennungskraftmaschine über konventionelle Wasserdampfkreisläufe nutzen. Allerdings sind die Wirkungsgrade derzeit im Vergleich mit reinem Erdgas befeuerten Gas- und Dampfkraftwerken niedriger. Dokument US2019/390577A1 offenbart eine Vorrichtung umfassend eine Verbrennungskraftmaschine nach dem Stand der Technik.

Bekannt sind auch Brennstoffzellen, bei denen die elektrische Energie durch Nutzung von Wasserstoff erzeugt wird. Brennstoffzellen weisen jedoch jetzt im Vergleich zu Verbrennungskraftmaschinen sehr hohe spezifische Investitionskosten auf. Es ist auch nicht zu erwarten, dass sich das in Zukunft ändert. Der im Vergleich höhere Wirkungsgrad gegenüber Verbrennungskraftmaschinen wird voraussichtlich in netzgekoppelten Kraftwerksanlagen nicht relevant sein, da für eine Wirtschaftlichkeit zu wenige Betriebsstunden zusammenkommen.

Aufgabe der Erfindung ist es eine Vorrichtung und ein Verfahren zu einem grünen Energieerzeugungskonzept anzugeben, welches einen sehr hohen Wirkungsgrad mit gleichzeitig niedrigsten spezifischen Investitionskosten verbindet, weitgehend emissionsfrei und flexibel einsetzbar ist.

Die auf eine Vorrichtung gerichtete Aufgabe der Erfindung ist gelöst durch die Merkmale von Anspruch 1.

Die erfindungsgemäße Vorrichtung zur Erzeugung elektrischer Energie aus Wasserstoff und Sauerstoff umfasst eine Verbrennungskraftmaschine, insbesondere eine Gasturbine und einen in den Abgaskanal der Verbrennungskraftmaschine geschalteten Abhitzedampferzeuger, der nur eine Druckstufe aufweist, eine Dampfturbine, einen an die Dampfturbine angeschlossenen Generator und eine Leitung. Erfindungsgemäß ist weiterhin ein H2-O2 Reaktor vorgesehen, dem Dampf aus dem Abhitzedampferzeuger, Wasser, Sauerstoff und Wasserstoff zuführbar ist, sodass in dem H₂-O₂ Reaktor eine Reaktion von Sauerstoff und Wasserstoff zu Wasserdampf erzielbar ist, in welcher das eingebrachte Wasser verdampft wobei zusätzlicher Wasserdampf erzeugbar ist, wobei der dadurch resultierende stark überhitzte Wasserdampf der Dampfturbine zuführbar ist, und durch den an die Dampfturbine angeschlossenen Generator eine elektrische Leistung bereitstellbar ist, und zur gezielten Steuerung der Reaktion im H₂-O₂ Reaktor und zur Einstellung der Dampfaustritttemperatur aus dem H₂-O₂-Reaktor Hochdruckspeisewasser (14) aus dem Abhitzedampferzeuger in den H2-O2 Reaktor über die Leitung einspritzbar ist.

Die Erfindung geht dabei von der Überlegung aus, eine konventionelle Gasturbine oder Gasmotor und einen konventionellen Abhitzedampferzeuger zu verwenden. Die Verbrennungskraftmaschine kann dabei ganz mit Wasserstoff oder teilweise mit Wasserstoff und Erdgas befeuert werden. Der Abhitzedampferzeuger weist nur eine Druckstufe auf und hat somit nur ein Druckniveau. Er ist so gestaltet, dass nur mäßig überhitzter Dampf oder auch nur Sattdampf erzeugt wird.

Erfindungsgemäß ist weiterhin ein H₂-O₂ Reaktor vorgesehen, der in einer durch den Abhitzedampferzeuger bereitgestellten Wasserdampfatmosphäre Wasserstoff und Sauerstoff zur Reaktion bringt. Diese Reaktion führt zu dem Verbrennungsprodukt Wasserdampf. Somit sind Verbrennungsprodukt und Kreislaufmedium im Wasserdampfkreislauf des Abhitzedampferzeugers von der gleichen Art.

Die Erfindung erkennt auf besondere Art und Weise, das sich eine konventionelle Gasturbine und ein konventioneller Abhitzedampferzeuger, der leicht überhitzten Dampf auf einem Druckniveau liefert, in Verbindung mit einem H₂-O₂ Reaktor ein stark überhitzter Dampf erzeugen lässt und gleichzeitig die Abgaswärme ideal ausgenutzt werden kann. Der bei der Reaktion von Wasserstoff und Sauerstoff entstehende Wasserdampf, der unter hohem Druck und Temperatur steht, wird in den Wasserdampfkreislauf eingebracht und kann als Kreislaufmedium bis auf das im Kondensator definierte Niveau ausgenutzt werden.

Bei nur teilweisem Ersatz von Erdgas durch Wasserstoff als Brennstoff ermöglicht es die Erfindung den Wasserstoff dort einzusetzen, wo er den größten Nutzen hat. Durch Einsatz des Wasserstoffs im Wasserdampfkreislauf kann der auf diesen Brennstoffmassenstrom bezogene Wirkungsgrad sehr deutlich gegenüber einem Einsatz in der Gasturbine gesteigert werden.

Beim Betrieb des H₂-O₂ Reaktors ist auf möglichst vollständige Umsetzung vor allem von Wasserstoff und in etwas geringerem Maße Sauerstoff zu achten. Wasserstoff kann die Eigenschaften des in der Dampfturbine eingesetzten Materials durch Wasserstoffversprödung negativ beeinflussen und zu Korrosion führen. Zur Sicherstellung einer möglichst vollständigen Umsetzung des Wasserstoffs wird die Vorrichtung vorzugsweise so gesteuert, dass ein gewisser Überschuss von Sauerstoff vorhanden ist. Ggf. überschüssiger Sauerstoff kann vorzugsweise über das Vakuumsystem am Kondensator des Wasserdampfkreislaufes hinausgefördert werden. Alternativ kann überschüssiger Sauerstoff auch durch andere Maßnahmen, wie beispielsweise Membranentgaser entfernt werden, um Sauerstoff in anderen Bereichen des Wasserdampfkreislaufs weitgehend zu vermeiden. Insbesondere wenn dem Abhitzedampferzeuger eine Vorwärmstrecke für kaltes Speisewasser vorgeschaltet ist, ergibt sich auch in diesem Bereich die Notwendigkeit nicht kondensierbare Gase aus dem Kreislauf zu entfernen.

Zur gezielten Steuerung der Reaktion im H₂-O₂ Reaktor ist Speisewasser aus dem Abhitzedampferzeuger über die Leitung in den H₂-O₂ Reaktor einspritzbar. Durch das Einspritzen von Speisewasser kann gezielt die Reaktion im H₂-O₂ Reaktor beeinflusst werden. Dadurch lassen sich z.B. Flashbacks verhindern und die Dampftemperatur am Austritt des Reaktors gezielt einstellen. Das Speisewasser wird dazu an geeigneter Stelle (z.B. in den Reaktionszonen von Wasserstoff und Sauerstoff oder in einer Mischstrecke am Austritt des Reaktors) in den H₂-O₂ Reaktor eingespritzt. Das Speisewasser ist Hochdruckspeisewasser aus dem Abhitzedampferzeuger, vorzugsweise aus dem Austritt des Economizers.

Zum Zwecke der Leistungserhöhung kann es zudem vorteilhaft sein,
kaltes Speisewasser, welches Stromauf des Abhitzedampferzeugers entnommen wird, zuzumischen. Das kalte Speisewasser ist insbesondere deshalb vorteilhaft, da je nach Kraftwerksauslegung, z.B. den geforderten Frischdampfparametern, die Abwärme des Gasturbinenabgases bereits optimal ausgenutzt wurde und keine weitere Wärme zur Verfügung steht, aber eine entsprechend weiter erhöhte Dampfturbinenleistung gewünscht wird. Eine Zumischung von kaltem Speisewasser wirkt sich zwar negativ auf den Wirkungsgrad aus, dies wird aber zur Senkung der spezifischen Investkosten in Kauf genommen.

Der Abhitzedampferzeuger kann z.B. als Naturumlauf- oder auch als Zwangdurchlauftyp konzipiert werden. Letzteres verspricht gerade bei sehr hohen Verdampfungsdrücken eine erhöhte Anlagenflexibilität (z.B. verkürzte Startzeiten)
Zur Steigerung des Wirkungsgrades der Anlage können eine oder mehrere Anzapfungen an der Dampfturbine genutzt werden, welche Kondensat und/oder Speisewasser über entsprechende Wärmetauscher mit minderwertigem Dampf aufwärmen und es somit ermöglichen, mehr hochwertigen Dampf im Abhitzedampferzeuger und/oder im H2O2-Reaktor zu erzeugen.

Bei einer besonderen Weiterentwicklung der Erfindung ist ein Enthitzer, der als Wärmetauscher ausgebildet ist, stromauf des Kondensators eingebunden. Der Enthitzer ist dabei zur Wärmeaufnahme primärseitig in die Dampfleitung zwischen der Dampfturbine und einem der Dampfturbine nachgeschalteten Kondensator geschaltet. Zur Wärmeabgabe ist der Enthitzer sekundärseitig in die Leitung zur Zuführung von zusätzlichem nicht im Abhitzedampferzeuger vorgewärmten Speisewasser in den H₂-O₂ Reaktor geschaltet. Der Enthitzer ist dann erforderlich, wenn mit dem H₂-O₂ Reaktor sehr hohe Frischdampfparameter von beispielsweise 1300°C und 150 bar Druck erzeugt werden. Am Austritt der Dampfturbine liegt dann immer noch stark überhitzter Dampf an, der durch den Enthitzer enthitzt wird, bevor er im Kondensator kondensiert wird. Bei sehr hoch gewählten Frischdampfdrücken und - temperaturen kann es vorteilhaft sein, den Abhitzedampferzeuger als Zwangdurchlaufkessel statt als Naturumlauf (Trommel)-kessel auszuführen.

Vorzugsweise wird der Verdampfungsdruck im Abhitzedampferzeuger nur so hoch eingestellt, dass in Abhängigkeit von der über die H₂-O₂ Reaktion eingestellten Frischdampftemperatur, Nässe am Austritt der Dampfturbine vermeidbar ist. Die Überhitzung im Abhitzedampferzeuger wird nur so hoch gewählt, dass man ohne zusätzliche Verdampferdruckstufen die Abgaswärme optimal ausnutzt. Da der Fokus auf der optimalen Ausnutzung der Abgaswärme liegt und gleichzeitig ein möglichst einfaches und kostengünstiges Konzept umgesetzt werden soll, wird der Verdampfungsdruck in Abhängigkeit von der über die H₂-O₂ Reaktion eingestellten Frischdampftemperatur nur so hoch gewählt, dass auch ohne Zwischenüberhitzung am Austritt der Dampfturbine beim jeweiligen Kondensatordruck kein zu Schaufelerosion führendes Nässeproblem vorliegt.

Eine weitere vorteilhafte Ausführungsform der Erfindung umfasst weiterhin einen elektrisch betriebenen Überhitzer, der dem H₂-O₂ Reaktor vorgeschaltet ist, und durch welchen sich bei Nichtbetrieb des H₂-O₂-Rektors die Frischdampftemperatur des Dampfes soweit erhöhen lässt, dass am Austritt der Dampfturbine Nässe vermieden ist. Mit Blick auf die derzeit noch unzureichende Wasserstoffinfrastruktur und daraus möglicherweise resultierenden Wasserstoff Lieferengpässen kann es von Vorteil sein, wenn im Kreislauf eine solche Option vorgesehen wird, bei der ein Weiterbetrieb des H₂-O₂ Reaktors auch ohne Wasserstoff/Sauerstoff Versorgung sichergestellt ist.

Bei einer vorteilhaften Weiterentwicklung der Erfindung weist der Abhitzedampferzeuger Heizflächen auf, die einen ersten Verdampfer und einen zweiten Verdampfer bilden, und Heizflächen, die einen ersten Überhitzer bilden, wobei der erste Überhitzer zwischen den Heizflächen des ersten Verdampfers und des zweiten Verdampfers angeordnet ist, sodass ein Verzögerungspotential beim Start der Gasturbine vermieden ist. Dies bietet den Vorteil, dass die Gasturbine immer mit vollem Gradienten angefahren werden kann, auch wenn der Abhitzedampferzeuger drucklos und der Überhitzer noch trocken und damit ungekühlt ist.

Grundsätzlich ist es auch vorteilhaft möglich, den durch den H₂-O₂ Reaktor erzeugten Dampf in ein Fernwärmenetz abzugeben. Dazu ist die Dampfturbine entsprechend mit Anzapfungen auszustatten oder ggf. als Gegendruckturbine auszuführen.

Die auf ein Verfahren gerichtete Aufgabe der Erfindung wird gelöst durch die Merkmale nach Anspruch 9. Die erfindungsgemäßen Vorteile der Vorrichtung gelten ebenso für das Verfahren.

Das erfindungsgemäße Verfahren zur Erzeugung elektrischer Energie aus Wasserstoff und Sauerstoff umfasst eine Verbrennungskraftmaschine, insbesondere eine Gasturbine, und einen in den Abgaskanal der Verbrennungskraftmaschine geschalteten Abhitzedampferzeuger, der nur eine Druckstufe aufweist, eine Dampfturbine (11), einen an die Dampfturbine (11) angeschlossenen Generator (12) und eine Leitung (19). Weiterhin ist ein H₂-O₂ Reaktor vorgesehen, dem Dampf aus dem Abhitzedampferzeuger, Wasser, Sauerstoff und Wasserstoff zugeführt wird, sodass in dem H₂-O₂ Reaktor Sauerstoff und Wasserstoff zu Wasserdampf reagiert, und weiterer Wasserdampf durch Verdampfung des eingespritzten Wassers entsteht, wobei der Wasserdampf der Dampfturbine zugeführt wird, und durch den an die Dampfturbine angeschlossenen Generator eine elektrische Leistung erzeugt wird, und die Reaktion im H₂-O₂ Reaktor vorzugsweise gezielt gesteuert wird, indem Speisewasser aus dem Abhitzedampferzeuger über die Leitung in den H₂-O₂ Reaktor eingespritzt wird.

Vorzugsweise wird Hochdruckspeisewasser aus dem Austritt des Economizers des Abhitzedampferzeuger verwendet.

Bei sehr hohen Dampfparametern stromab des H₂-O₂-Reaktors (z.B. 150 bar und 1300 °C) ist im Wasserdampfkreislauf vorzugsweise ein Enthitzer stromauf des Kondensators integriert, der als Wärmetauscher ausgebildet ist, welcher primärseitig in die Dampfleitung zwischen der Dampfturbine und einem der Dampfturbine nachgeschalteten Kondensator geschaltet wird, um Wärme aufzunehmen, und sekundärseitig in eine Leitung geschaltet wird, um Wärme abzugeben.

Vorteilhaft ist weiterhin ein oder mehrere Kondensat-/ Speisewasservorwärmer, wobei zur Wirkungsgradsteigerung Wasserdampf aus einer oder mehrerer Anzapfungen an der Dampfturbine entnommen und den Vorwärmern zwecks Beheizung zugeführt wird.

Der Verdampfungsdruck im Abhitzedampferzeuger wird vorzugsweise nur so hoch eingestellt ist, dass in Abhängigkeit von der über die H₂-O₂-Reaktion eingestellten Frischdampftemperatur, auch ohne Zwischenüberhitzung am Austritt der Dampfturbine Nässe vermieden ist.

Bei einer besonderen Weiterentwicklung ist weiterhin ein elektrisch betriebener Überhitzer vorgesehen, der dem H₂-O₂-Reaktor vorgeschaltet ist, und durch welchen sich die Frischdampftemperatur des Dampfes bei Bedarf (H₂-O₂-Reaktor nicht oder nur mit verringerter Leistung im Betrieb) soweit erhöhen lässt, dass am Austritt der Dampfturbine Nässe vermieden ist.

Bei einer besonderen Ausführungsform der Erfindung weist der Abhitzedampferzeuger Heizflächen auf, die einen ersten Verdampfer und einen zweiten Verdampfer bilden, und Heizflächen, die einen ersten Überhitzer bilden, wobei der erste Überhitzer zwischen den Heizflächen des ersten Verdampfers und des zweiten Verdampfers angeordnet ist, sodass ein Verzögerungspotential beim Start der Gasturbine vermieden ist.

Die Erfindung hat gegenüber einem konventionellen Gas- und Dampfkraftwerk (GuD), welches ganz oder teilweise Wasserstoff als Brennstoff für die Gasturbine nutzt, eine Reihe von Vorteilen:
Der Wirkungsgrad allgemein und insbesondere im Falle des nur teilweisen Ersatzes von Erdgas durch Wasserstoff ist höher als bei einem auf der gleichen Gasturbine basierenden GuD. Dies ergibt sich dadurch, dass
- Frischdampfdruck und -temperatur höher gewählt werden können, als wie dies durch das Abgastemperaturniveau der Gasturbine möglich wäre,
- die im Abgas der Gasturbine enthaltene Wärme besser ausgenutzt wird, also die Abgastemperatur am Austritt des Kamins niedriger ist,
- der bei der Reaktion von Wasserstoff und Sauerstoff entstehende unter hohem Druck und Temperatur stehende Wasserdampf als Kreislaufmedium zu sehen ist und insofern bis auf das im Kondensator definierte Niveau ausgenutzt werden kann
- bei erhöhten Wasserstoff-Anteilen im Gasturbinen Brenngas im Vergleich zu Erdgas die Verbrennungstemperatur heute noch deutlich abgesenkt werden muss, um Flashback, Stickoxidemissionen, etc. im Griff zu behalten. Die Temperatur im Reaktor ist hingegen deutlich niedriger und kann darüber hinaus durch das Einspritzen von Speisewasser sehr genau geregelt werden, das Potential der Wasserstofffeuerung kann also besser ausgenutzt werden.
- bei nur teilweisem Ersatz des Erdgases als Brennstoff, kommt der Wasserstoff dort zum Einsatz, wo er den größten Nutzen hat. Durch Einsatz des Wasserstoffs im Wasserdampfkreislauf beträgt der auf diesen Brennstoffmassenstrom bezogene Wirkungsgrad über 50%, was sehr deutlich über dem Wirkungsgrad von Gasturbinen liegt.

Die Leistung erhöht sich im Vergleich sogar sehr deutlich und kann unter teilweiser Aufgabe des Wirkungsgradvorteiles gegenüber dem GuD noch weiter gesteigert werden. Zwecks Verbesserung der spezifischen Kosten kann bei heute problemlos darstellbaren Frischdampfparametern und einem immer noch GuD ähnlichen Wirkungsgrad die Leistung der Dampfturbine mehr als verdoppelt werden und übersteigt somit den Leistungsanteil der Gasturbine.

Die im Vergleich verbesserte Leistung und Wirkungsgrad wird mit ungefähr gleichen Kosten erreicht, da Einsparungen und Mehrungen sich ungefähr die Waage halten. Dies lässt sich in Bezug auf Einsparungen wie folgt verdeutlichen:
- Es gibt nur eine (statt wie beim GuD meist üblichen mehreren Druckstufen) im Abhitzedampferzeuger aus günstigem Stahl und keine teuren Hochtemperaturheizflächen für Überhitzer oder Zwischenüberhitzer. Damit entfallen auch entsprechende End- und Zwischeneinspritzungen
- Es gibt nur eine (statt wie beim GuD mehrerer Frischdampfleitungen und zusätzlich oft noch kalter und heißer Zwischenüberhitzung) und vergleichsweise kalte Frischdampfleitung (somit günstiger Stahl) vom Kessel zum H₂-O₂-Reaktor, der bevorzugt möglichst nahe an der Dampfturbine angeordnet wird, um die stromab von ihm nötige hochtemperaturfähige Frischdampfleitung möglichst kurz zu halten.
- Es wird keine Deminwasseraufbereitungsanlage für die Kreislaufwasserzusatzversorgung benötigt. Im Grunde ist dieses Kraftwerk mit dem entsprechenden Rückkühlsystem nicht nur ein wasserfreies Kraftwerk, sondern sogar ein wasserproduzierendes. Dies gilt, wenn der Wasserstoff und Sauerstoff produzierende und als Rohstoff Wasser benötigende Elektrolyseur nicht on-site betrieben wird oder falls blauer Wasserstoff in Kombination mit aus Luft gewonnenem Sauerstoff zum Einsatz kommt.

Die Erfindung erfordert neben dem H₂-O₂ Reaktor als zusätzliches Element, ggf. Anpassungen am Turbosatz der Dampfturbine und an den Kreislaufpumpen (erhöhter Hochdruckdampfmassenstrom), ein Sauerstoffbereitstellungssystem und eine Vergrößerung des Rückkühlsystems.

Die Vergrößerung des Rückkühlsystems kann bei Luftkondensatoren und Durchlaufkühlungen mit begrenzter Aufwärmspanne ganz oder teilweise durch die über den Eindruckprozess mögliche umfassende Nutzung von Eco-Bypassschaltungen im Kessel aufgefangen werden, da während des sonst die Auslegung bestimmenden Dampfbypassbetriebes sehr viel Wärme über das Abgas abgeführt werden kann.

Ein weiterer Vorteil ergibt sich durch die deutlich verbesserte Flexibilität gegenüber einem GuD. Dies ergibt sich unter anderem wie folgt:
- Da die erste dem heißen Abgasstrom der Gasturbine ausgesetzte Heizfläche nicht wie bisher eine, während des Startvorganges ungekühlte Überhitzerheizfläche ist, sondern eine ständig gekühlte Verdampferheizfläche, kann die Gasturbine mit vollem Gradienten auch bei kaltem Kessel angefahren werden, daraus ergibt sich eine entsprechende Startzeitverkürzung.
- Das schnelle Abfahren des Kraftwerkes ist mit deutlich weniger Beanspruchung des Kessels möglich, da die Überhitzerheizfläche entweder gar nicht vorhanden ist oder bevorzugt zwischen den Verdampferheizflächen angeordnet wird. Somit kommt sie nicht mit kaltem Abgas/ Luft während und direkt nach dem Abfahren in Berührung, damit entfällt das mögliche "Quenchen" der Überhitzerheizfläche.
- Der Hochtemperaturbereich (H₂-O₂ Reaktor, Dampfturbineneintritt inklusive Ventilen, verbindende Rohrleitungen) ist räumlich eng begrenzt und eignet sich damit besonders für eine Warmhaltung im Stillstand mittels Heizmatten. Die Dampfturbine kann somit sehr frühzeitig angefahren werden, dabei hilft es, dass über den H₂-O₂-Reaktor die Temperatur des in die Dampfturbine eintretenden Frischdampfes sehr gut geregelt werden kann.
- Die Möglichkeit der Temperatureinstellung über den H₂-O₂-Reaktor und die Regelung der Wassereinspritzmenge in ebendiesen bieten weitere sehr schnell wirkende Lastregelmöglichkeiten (auch in Bezug auf Überlast).

In Summe wird der bisher eher träge reagierende Dampfteil damit ähnlich schnell, wie die Gasturbine und kann auch ohne diese zur Leistungserhöhung des Kraftwerkes beitragen. Auch dieser Umstand kann sich gerade bei einer Nachrüstung sehr positiv auswirken, da die Wahl eines offenen Gasturbinenprozesses ursprünglich oft durch die damit einhergehende Flexibilität begründet war.

Ein weiterer wichtiger Vorteil dieses Konzeptes im Vergleich zu ganz oder teilweise Wasserstoff befeuerten Gasturbinen und darauf aufbauenden GuD mit konventionellem Wasserdampfkreislauf und auch sonst allen anderen Prozessen, welche Wasserstoff mit Luftsauerstoff verbrennen, liegt darin, dass das bei der Reaktion von Wasserstoff und Sauerstoff entstehende Wasser nicht in die Atmosphäre verloren geht und insofern gerade bei Wasserknappheit, die wertvolle Ressource Wasser für weitere Nutzungen zur Verfügung steht. Ein weiterer Vorteil gegenüber den zuvor genannten Luftsauerstoff zur Wasserstoff-Verbrennung nutzenden Prozessen besteht darin, dass durch die Abwesenheit von Stickstoff auch keine Stickoxide entstehen und in die Atmosphäre abgegeben werden.

Im Folgenden wird die Erfindung anhand von Figuren näher beschrieben. Darin zeigt:
Figur 1: Eine erfindungsgemäße Vorrichtung zum Erzeugen von elektrischer Energie aus Wasserstoff und Sauerstoff
Figur 2: Eine Zusammenstellung mehrerer Weiterentwicklungen der erfindungsgemäßen Vorrichtung
Figur 3: Eine Weiterentwicklung der erfindungsgemäßen Vorrichtung mit separaten Vorwärmern
Figur 4: Eine Weiterentwicklung der erfindungsgemäßen Vorrichtung mit einem Durchlaufdampferzeuger

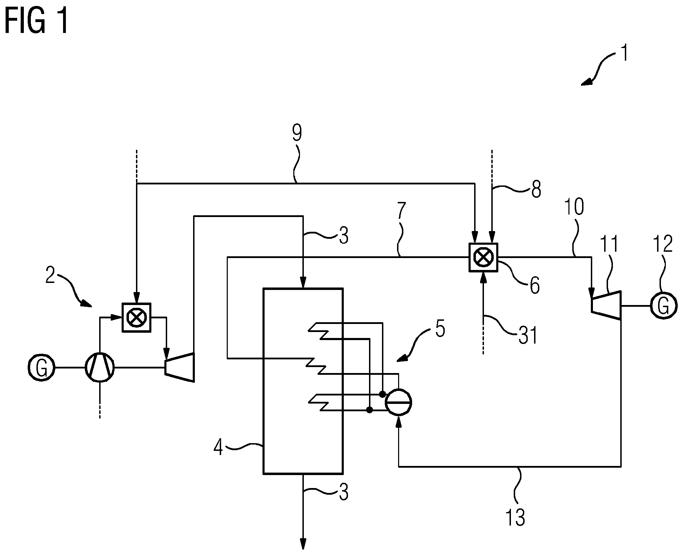

Figur 1 zeigt die erfindungsgemäße Vorrichtung 1 zur Erzeugung elektrischer Energie aus Wasserstoff und Sauerstoff. Die Vorrichtung umfasst eine Gasturbine 2, einen in den Abgaskanal 3 der Gasturbine geschalteten Abhitzedampferzeuger 4, einen H₂-O₂ Reaktor 6 und eine Dampfturbine 11. Die Gasturbine 2 und der Abhitzedampferzeuger 4 sind konventionelle Komponenten. Die Gasturbine 2 kann ganz mit Wasserstoff oder teilweise mit Wasserstoff und Erdgas befeuert werden. Der Abhitzedampferzeuger 4 ist so ausgelegt, dass er nur eine Druckstufe 5 aufweist und leicht überhitzten Dampf liefert. Dem H₂-O₂ Reaktor 6 ist Dampf 7 aus dem Abhitzedampferzeuger 4, Sauerstoff 8, Wasserstoff 9 und Wasser 31 über getrennte Leitungen zuführbar.

Der H₂-O₂ Reaktor ist so ausgelegt, dass in ihm eine Reaktion von Sauerstoff 8 und Wasserstoff 9 zu Wasserdampf 10 erzielbar ist. Diese Reaktion führt zu dem Verbrennungsprodukt Wasserdampf. Der Wasserdampf 10 ist stark überhitzt (wobei durch Zugabe von Dampf 7 und Wasser 31 eine zulässige Dampftemperatur eingestellt wird) und wird über eine Dampfleitung 10 der Dampfturbine 11 zugeführt. Die Dampfturbine 11 ist mit einem Generator 12 verbunden, durch den eine elektrische Leistung bereitstellbar ist. Der bei der Reaktion von Wasserstoff und Sauerstoff entstehende Wasserdampf, der unter hohem Druck und Temperatur steht, wird somit in den Wasserdampfkreislauf eingebracht und kann als Kreislaufmedium bis auf das im Kondensator definierte Niveau ausgenutzt werden. Durch die bessere Wärmeausnutzung kann die Abgastemperatur am Austritt des Kamins niedriger sein. Durch Einsatz des Wasserstoffs im Wasserdampfkreislauf kann der auf diesen Brennstoffmassenstrom bezogene Wirkungsgrad sehr deutlich gegenüber einem Einsatz in der Gasturbine gesteigert werden.

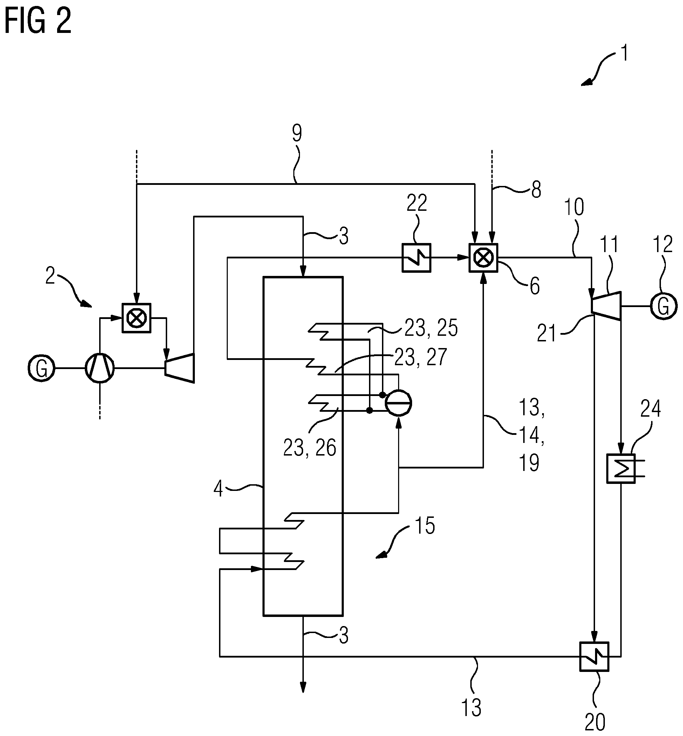

Figur 2 zeigt mehrere Weiterentwicklungen der erfindungsgemäßen Vorrichtung. Die Weiterentwicklungen können dabei in Kombination oder getrennt voneinander realisiert sein.

Zur gezielten Steuerung der Reaktion und Leistungserhöhung im H₂-O₂ Reaktor 6 wird Speisewasser 13 aus dem Abhitzedampferzeuger 4 in den H₂-O₂ Reaktor 6 über eine Leitung 19 einspritzt. Das Speisewasser 13 kann dabei Hochdruckspeisewasser 14 sein, welches vorteilhaft am Austritt des Economizers 15 des Abhitzedampferzeuger 4 entnommen wird.

Zur weiteren Wirkungsgradsteigerung ist in Figur 2 zudem ein Kondensatvorwärmer 20 vorgesehen, der dem Abhitzedampferzeuger 4 zur Vorwärmung von Speisewasser 13 vorgeschaltet ist. Der Kondensatvorwärmer 20 ist mit Wasserdampf beheizt, der aus einer oder mehrerer Anzapfungen 21 an der Dampfturbine 11 entnommen wird.

Um die Frischdampftemperatur des Dampfes bei Bedarf (z. B. wenn der H₂-O₂-Reaktor außer Betrieb ist) soweit erhöhen zu können, dass am Austritt der Dampfturbine 11 Nässe vermieden wird, ist in Figur 2 weiterhin ein elektrisch betriebener Überhitzer 22 vorgesehen, welcher dem H₂-O₂-Reaktor 6 vorgeschaltet ist. Durch den elektrisch betriebenen Überhitzer 22 ist es möglich einen Weiterbetrieb des H₂-O₂ Reaktors auch ohne Wasserstoff/Sauerstoff Versorgung sicherzustellen.

Um ein Verzögerungspotential beim Start der Gasturbine 2 zu vermeiden, ist in Figur 2 ein Überhitzer 27 vorgesehen, der zwischen den Heizflächen 23 des ersten Verdampfers 25 und des zweiten Verdampfers 26 angeordnet ist. Dies bietet den Vorteil, dass die Gasturbine 2 immer mit vollem Gradienten angefahren werden kann, auch wenn der Abhitzedampferzeuger 4 drucklos und der Überhitzer 27 noch trocken, und damit ungekühlt ist.

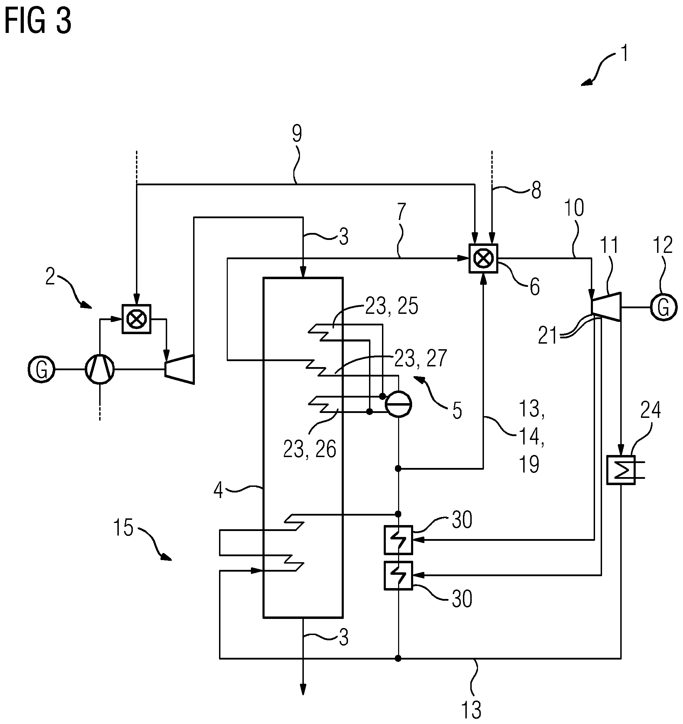

Figur 3 basiert auf der erfindungsgemäßen Ausführung nach Figur 1. Figur 3 zeigt eine Weiterentwicklung der erfindungsgemäßen Vorrichtung mit separaten Vorwärmern 30, die mit Anzapfungen an der Dampfturbine 11 verbunden sind.

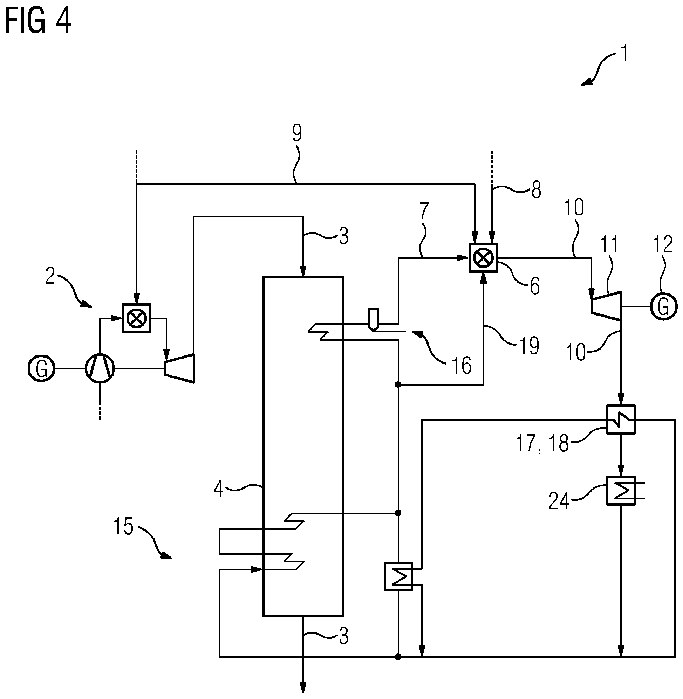

Figur 4 basiert weitgehend auf Figur 1. Figur 4 zeigt eine Weiterentwicklung der erfindungsgemäßen Vorrichtung mit einem Zwangdurchlaufdampferzeuger 16 und einem Enthitzer 17. Bei sehr hoch gewählten Frischdampfdrücken und -temperaturen ist es vorteilhaft, den Abhitzedampferzeuger 4 als Zwangdurchlaufkessel statt als Naturumlauf- (Trommel)-kessel auszuführen. Der Enthitzer 17 ist als Wärmetauscher 18 ausgebildet, der zur Energieaufnahme primärseitig in die Dampfleitung 10 zwischen der Dampfturbine 11 und einem der Dampfturbine 11 nachgeschalteten Kondensator 24 geschaltet ist, und zur Wärmeabgabe sekundärseitig in die Leitung 19 zur Zuführung von Speisewasser aus dem Abhitzedmpferzeuger 4 in den H₂-O₂ Reaktor 6 geschaltet ist. Der Enthitzer 17 ist dann erforderlich, wenn mit dem H₂-O₂ Reaktor 6 sehr hohe Frischdampfparametern von beispielsweise z.B. 1300°C und 150 bar Druck erzeugt werden. Am Austritt der Dampfturbine 11 liegt dann immer noch stark überhitzter Dampf an, der durch den Enthitzer 17 enthitzt wird, bevor dieser im Kondensator 24 kondensiert wird.

## Patentansprüche

1. Vorrichtung (1) zur Erzeugung elektrischer Energie aus Wasserstoff und Sauerstoff, umfassend eine Verbrennungskraftmaschine (2), insbesondere eine Gasturbine, einen in den Abgaskanal (3) der Verbrennungskraftmaschine (2) geschalteten Abhitzedampferzeuger (4), wobei der Abhitzedampferzeuger (4) nur eine Druckstufe (5) aufweist, eine Dampfturbine (11), einen an die Dampfturbine (11) angeschlossenen Generator (12), und eine Leitung (19), **dadurch gekennzeichnet, dass** weiterhin ein H2-O2 Reaktor (6) vorgesehen ist, dem Dampf (7) aus dem Abhitzedampferzeuger (4), Wasser (31), Sauerstoff (8) und Wasserstoff (9) zuführbar ist, sodass in dem H₂-O₂ Reaktor (6) unter Zuführung von Dampf (7) eine Reaktion von Sauerstoff (8) und Wasserstoff (9) zu Wasserdampf (10) erzielbar ist, in welcher das eingebrachte Wasser (31) verdampft wobei zusätzlicher Wasserdampf erzeugbar ist, wobei der dadurch resultierende stark überhitzte Wasserdampf (10) die Dampfturbine (11) zuführbar ist, und durch den an die Dampfturbine (11) angeschlossenen Generator (12) eine elektrische Leistung bereitstellbar ist, wobei zur gezielten Steuerung der Reaktion im H₂-O₂ Reaktor (6) und zur Einstellung der Dampfaustritttemperatur aus dem H₂-O₂-Reaktor Hochdruckspeisewasser (14) aus dem Abhitzedampferzeuger (4) in den H2-O2 Reaktor (6) über die Leitung (19) einspritzbar ist

2. Vorrichtung (1) nach Anspruch 1, **dadurch gekennzeichnet, dass** weiterhin ein Enthitzer (17) vorgesehen ist, der als Wärmetauscher (18) ausgebildet ist, welcher primärseitig in die Dampfleitung (10) zwischen der Dampfturbine (11) und einem der Dampfturbine (11) nachgeschalteten Kondensator (24) geschaltet ist, und sekundärseitig in die Leitung (19) geschaltet ist.

3. Vorrichtung (1) nach einem der vorstehenden Ansprüche, **dadurch gekennzeichnet, dass** weiterhin ein Kondensatvorwärmer (20) vorgesehen ist, der dem Abhitzedampferzeuger (4) zur Vorwärmung von Speisewasser (13) vorgeschaltet ist, wobei zur Wirkungsgradsteigerung Wasserdampf aus einer oder mehrerer Anzapfungen (21) an der Dampfturbine (11) entnehmbar und dem Kondensatvorwärmer (20) zuführbar ist.

4. Vorrichtung (1) nach einem der vorstehenden Ansprüche, **dadurch gekennzeichnet, dass** der Verdampfungsdruck im Abhitzedampferzeuger (4) nur so hoch eingestellt ist, dass in Abhängigkeit von der über die H2-O2-Reaktion eingestellten Frischdampftemperatur, auch ohne Zwischenüberhitzung, Nässe am Austritt der Dampfturbine (11) vermieden ist.

5. Vorrichtung (1) nach einem der vorstehenden Ansprüche, **dadurch gekennzeichnet, dass** weiterhin ein elektrisch betriebener Überhitzer (22) vorgesehen ist, welcher dem H2-O2-Reaktor (6) vorgeschaltet ist, und durch welchen sich die Frischdampftemperatur des Dampfes bei Nichtbetrieb des H₂-O₂-Rektors so weit erhöhen lässt, dass am Austritt der Dampfturbine (11) Nässe vermieden ist.

6. Vorrichtung nach einem der vorstehenden Ansprüche, **dadurch gekennzeichnet, dass** der Abhitzedampferzeuger (4) Heizflächen (23) aufweist, die einen ersten Verdampfer (25) und einen zweiten Verdampfer (26) bilden, und Heizflächen (23) die einen ersten Überhitzer (27) bilden, wobei der erste Überhitzer (27) zwischen den Heizflächen (23) des ersten Verdampfers (25) und des zweiten Verdampfers (26) angeordnet ist, sodass ein Verzögerungspotential beim Start der Gasturbine (2) vermieden ist.

7. Verfahren zur Erzeugung elektrischer Energie aus Wasserstoff und Sauerstoff, umfassend eine Verbrennungskraftmaschine (2), insbesondere eine Gasturbine, eine in den Abgaskanal (3) der Verbrennungskraftmaschine (2) geschalteten Abhitzedampferzeuger (4), der nur eine Druckstufe (5) aufweist, eine Dampfturbine (11), einen an die Dampfturbine angeschlossenen Generator (12), und eine Leitung (19),
wobei weiterhin ein H₂-O₂ Reaktor (6) vorgesehen ist, dem Dampf (7) aus dem Abhitzedampferzeuger (4), Wasser (31), Sauerstoff (8) und Wasserstoff (9) zugeführt wird, sodass in dem H₂-O₂ Reaktor (6) Sauerstoff (8) und Wasserstoff (9) zu Wasserdampf (10) reagiert, und weiterer Wasserdampf durch Verdampfung des eingespritzten Wassers (31) entsteht, wobei der Wasserdampf der Dampfturbine (11) zugeführt wird, und durch den an die Dampfturbine (11) angeschlossenen Generator (12) eine elektrische Leistung erzeugt wird, und die Reaktion im H₂-O₂ Reaktor (6) und die Dampftemperatur am Austritt des H₂-O₂-Reaktors (6) gezielt gesteuert wird, indem als Wasser (31) Hochdruckspeisewasser (14) aus dem Abhitzedampferzeuger (4) über die Leitung (19) in den H₂-O₂ Reaktor (6) eingespritzt wird.

8. Verfahren nach Anspruch 7, wobei der
Wasserdampfkreislauf einen Enthitzer (17) umfasst, der als Wärmetauscher (18) ausgebildet ist, welcher primärseitig in die Dampfleitung zwischen der Dampfturbine (11) und einem der Dampfturbine (11) nachgeschalteten Kondensator (24) geschaltet wird, um Wärme aufzunehmen, und sekundärseitig in die Leitung (13) geschaltet wird, um Wärme abzugeben.

9. Verfahren nach einem der Ansprüche 7 oder 8, weiterhin umfassend einen Kondensatvorwärmer (20), der dem Abhitzedampferzeuger (4) vorgeschaltet ist und durch das Speisewasser (13) vorgewärmt wird, wobei zur Wirkungsgradsteigerung Wasserdampf aus einer oder mehrerer Anzapfungen (21) an der Dampfturbine (11) entnommen und dem Kondensatvorwärmer (20) zugeführt wird.

10. Verfahren nach einem der Ansprüche 7 bis 9, wobei der Verdampfungsdruck im Abhitzedampferzeuger (4) nur so hoch eingestellt ist, dass in Abhängigkeit von der über die H2-O2-Reaktion eingestellten Frischdampftemperatur, auch ohne Zwischenüberhitzung, Nässe am Austritt der Dampfturbine (11) vermieden ist.

11. Verfahren nach einem der Ansprüche 7 bis 10, weiterhin umfassend einen elektrisch betriebenen Überhitzer (22), der dem H2-O2-Reaktor (6) vorgeschaltet ist, und durch welchen sich die Frischdampftemperatur des Dampfes bei Nichtbetrieb des Überhitzers (22), soweit erhöhen lässt, dass am Austritt der Dampfturbine (11) Nässe vermieden ist.

12. Verfahren nach einem der Ansprüche 7 bis 11, wobei der Abhitzedampferzeuger (4) Heizflächen aufweist, die einen ersten Verdampfer (25) und einen zweiten Verdampfer (26) bilden, und Heizflächen (23) die einen ersten Überhitzer (27) bilden, wobei der erste Überhitzer (27) zwischen den Heizflächen (23) des ersten Verdampfers (25) und des zweiten Verdampfers (26) angeordnet ist, sodass ein Verzögerungspotential beim Start der Gasturbine (2) vermieden ist.

## Claims

1. Apparatus (1) for generating electrical energy from hydrogen and oxygen, comprising an internal combustion engine (2), especially a gas turbine, a waste heat steam generator (4) connected to the exhaust gas duct (3) of the internal combustion engine (2), where the waste heat steam generator (4) has only one pressure stage (5), a steam turbine (11), a generator (12) connected to the steam turbine (11), and a conduit (19), **characterized in that** an H2-O2 reactor (6) is also provided, which can be fed with steam (7) from the waste heat steam generator (4), water (31), oxygen (8) and hydrogen (9), such that, in the H₂-O₂ reactor (6), with supply of steam (7), a reaction of oxygen (8) and hydrogen (9) to give steam (10) is achievable, in which the water (31) introduced evaporates, wherein additional steam is generatable, wherein the resulting greatly superheated steam (10) can be fed to the steam turbine (11), and the generator (12) connected to the steam turbine (11) can provide an electrical power, wherein, for control of the reaction in the H₂-O₂ reactor (6) and for adjustment of the steam exit temperature from the H₂-O₂ reactor, high-pressure feed water (14) from the waste heat steam generator (4) can be sprayed into the H2-O2 reactor (6) via the conduit (19).

2. Apparatus (1) according to Claim 1, **characterized in that** a heat remover (17) is also provided and is designed as a heat exchanger (18) which is connected on the primary side to the steam conduit (10) between the steam turbine (11) and a condenser (24) connected downstream of the steam turbine (11), and is connected on the secondary side to the conduit (19).

3. Apparatus (1) according to either of the preceding claims, **characterized in that** a condensate preheater (20) is also provided and is connected upstream of the waste heat steam generator (4) for preheating of feed water (13), wherein, in order to increase efficiency, steam can be withdrawn from one or more taps (21) on the steam turbine (11) and can be fed to the condensate preheater (20).

4. Apparatus (1) according to any of the preceding claims, **characterized in that** the evaporation pressure in the waste heat steam generator (4) is set only sufficiently high that, depending on the fresh steam temperature set via the H2-O2 reaction, wetness at the exit from the steam turbine (11) is avoided even without intermediate superheating.

5. Apparatus (1) according to any of the preceding claims, **characterized in that** an electrically operated superheater (22) is also provided and is connected upstream of the H2-O2 reactor (6), and by means of which the fresh steam temperature of the steam when the H₂-O₂ reactor is not in operation can be increased to such an extent that wetness is avoided at the exit from the steam turbine (11).

6. Apparatus according to any of the preceding claims, **characterized in that** the waste heat steam generator (4) has heating surfaces (23) that form a first evaporator (25) and a second evaporator (26), and heating surfaces (23) that form a first superheater (27), wherein the first superheater (27) is disposed between the heating surfaces (23) of the first evaporator (25) and of the second evaporator (26), so as to avoid any potential delay on startup of the gas turbine (2).

7. Method for generating electrical energy from hydrogen and oxygen, comprising an internal combustion engine (2), especially a gas turbine, a waste heat steam generator (4) which is connected to the exhaust gas duct (3) of the internal combustion engine (2) and has only one pressure stage (5), a steam turbine (11), a generator (12) connected to the steam turbine, and a conduit (19),
wherein an H₂-O₂ reactor (6) is also provided, which is fed with steam (7) from the waste heat steam generator (4), water (31), oxygen (8) and hydrogen (9), such that, in the H₂-O₂ reactor (6), oxygen (8) and hydrogen (9) are reacted to give steam (10), and further steam is formed by the evaporation of the water (31) injected, wherein the steam is fed to the steam turbine (11), and the generator (12) connected to the steam turbine (11) generates an electrical power, and the reaction in the H₂-O₂ reactor (6) and the steam temperature at the exit from the H₂-O₂ reactor (6) are controlled by spraying high-pressure feed water (14) as water (31) from the waste heat steam generator (4) into the H₂-O₂ reactor (6) via the conduit (19).

8. Method according to Claim 7, wherein the steam circuit comprises a heat remover (17) designed as a heat exchanger (18) which is connected on the primary side to the steam conduit between the steam turbine (11) and a condenser (24) connected downstream of the steam turbine (11), in order to absorb heat, and is connected on the secondary side to the conduit (13), in order to release heat.

9. Method according to either of Claims 7 and 8, further comprising a condensate preheater (20) which is connected upstream of the waste heat steam generator (4) and by which feed water (13) is preheated, wherein, in order to increase efficiency, steam is withdrawn from one or more taps (21) on the steam turbine (11) and is fed to the condensate preheater (20).

10. Method according to any of Claims 7 to 9, wherein the evaporation pressure in the waste heat steam generator (4) is set only sufficiently high that, depending on the fresh steam temperature set via the H2-O2 reaction, wetness at the exit from the steam turbine (11) is avoided even without intermediate superheating.

11. Method according to any of Claims 7 to 10, further comprising an electrically operated superheater (22) which is connected upstream of the H2-O2 reactor (6), and by means of which the fresh steam temperature of the steam when the superheater (22) is not in operation can be increased to such an extent that wetness is avoided at the exit from the steam turbine (11).

12. Method according to any of Claims 7 to 11, wherein the waste heat steam generator (4) has heating surfaces that form a first evaporator (25) and a second evaporator (26), and heating surfaces (23) that form a first superheater (27), wherein the first superheater (27) is disposed between the heating surfaces (23) of the first evaporator (25) and of the second evaporator (26), so as to avoid any potential delay on startup of the gas turbine (2).

## Revendications

1. Installation (1) de production d'énergie électrique à partir d'hydrogène et d'oxygène, comprenant une machine (2) à combustion interne, en particulier une turbine à gaz, un générateur (4) de vapeur à récupération de la chaleur perdue monté dans le conduit (3) de gaz d'échappement de la machine (2) à combustion interne, dans laquelle le générateur (4) de vapeur à récupération de la chaleur perdue a seulement un étage (5) de pression, une turbine (11) à vapeur, un générateur (12) raccordé à la turbine (11) à vapeur et un conduit (19), **caractérisée en ce qu'**il est prévu en outre un réacteur (6) H2-O2, auquel de la vapeur (7) provenant du générateur (4) de vapeur à récupération de la chaleur perdue, de l'eau (31), de l'oxygène (8) et de l'hydrogène (9) peuvent être envoyés, de sorte qu'il peut être obtenu dans le réacteur (6) H₂-O₂, avec envoi de vapeur (7), une réaction de l'oxygène (8) et de l'hydrogène (9) en de la vapeur (10) d'eau, dans laquelle l'eau (31) engagée s'évapore, de la vapeur d'eau supplémentaire pouvant être produite, dans laquelle la vapeur (10) d'eau, fortement surchauffée en résultant, peut être envoyée à la turbine (11) à vapeur et, par le générateur (12) raccordé à la turbine (11) à vapeur, une puissance électrique peut être mise à disposition, dans laquelle, pour la commande ciblée de la réaction dans le réacteur (6) H₂-O₂ et pour le réglage de la température de sortie de la vapeur du réacteur H₂-O₂, de l'eau (14) d'alimentation sous haute pression peut être injectée du générateur (4) de vapeur à récupération de la chaleur perdue dans le réacteur (6) H2-O2 en passant par le conduit (19).

2. Installation (1) suivant la revendication 1, **caractérisée en ce qu'**il est prévu en outre un désurchauffeur (17), qui est constitué en échangeur de chaleur (18), lequel est monté du côté primaire dans le conduit (10) pour la vapeur entre la turbine (11) à vapeur et un condenseur (24) en aval de la turbine (11) à vapeur et qui est monté du côté secondaire dans le conduit (19).

3. Installation (1) suivant l'une des revendications précédentes, **caractérisée en ce qu'**il est prévu en outre un préchauffeur (20) de condensat, qui est monté en amont du générateur (4) de vapeur à récupération de la chaleur perdue pour le préchauffage de l'eau (13) d'alimentation, dans laquelle, pour augmenter le rendement, de la vapeur d'eau peut être prélevée d'une ou de plusieurs prises (21) sur la turbine (11) à vapeur et être envoyée au préchauffeur (20) de condensat.

4. Installation (1) suivant l'une des revendications précédentes, **caractérisée en ce que** la pression d'évaporation dans le générateur (4) de vapeur à récupération de la chaleur perdue est réglée seulement si haute que, en fonction de la température de la vapeur vive réglée par la réaction H2-O2, on évite, même sans surchauffe intermédiaire, de l'humidité à la sortie de la turbine (11) à vapeur.

5. Installation (1) suivant l'une des revendications précédentes, **caractérisée en ce qu'**il est prévu en outre un surchauffeur (22) fonctionnant électriquement, qui est monté en amont du réacteur (6) H2-O2 et par lequel la température de vapeur vive de la vapeur peut, lorsque le réacteur H₂-O₂ n'est pas en fonctionnement, être élevée tant que la présence d'humidité à la sortie de la turbine (11) à vapeur est empêchée.

6. Installation suivant l'une des revendications précédentes, **caractérisée en ce que** le générateur (4) de vapeur à récupération de la chaleur perdue a des surfaces (23) de chauffe, qui forment un premier évaporateur (25) et un deuxième évaporateur (26) et des surfaces (23) de chauffe, qui forment un premier surchauffeur (27), dans laquelle le premier surchauffeur (27) est monté entre les surfaces (23) de chauffe du premier évaporateur (25) et du deuxième évaporateur (26), de manière à empêcher un retard potentiel au démarrage de la turbine (2) à gaz.

7. Procédé de production d'énergie électrique à partir d'hydrogène et d'oxygène, comprenant une machine (2) à combustion interne, en particulier une turbine à gaz, un générateur (4) de vapeur à récupération de la chaleur perdue monté dans le conduit (3) de gaz d'échappement de la machine (2) à combustion interne, qui n'a qu'un étage (5) de pression, une turbine (11) à vapeur, un générateur (12) raccordé à la turbine à vapeur et un conduit (19),
dans lequel il est prévu en outre un réacteur (6) H₂-O₂, auquel on envoie de la vapeur (7) provenant du générateur (4) de vapeur à récupération de la chaleur perdue, de l'eau (31), de l'oxygène (8) et de l'hydrogène (9), de sorte que dans le réacteur (6) H₂-O₂, de l'oxygène (8) et de l'hydrogène (9) réagissent en donnant de la vapeur (10) d'eau, et davantage de vapeur d'eau se crée par l'évaporation de l'eau (31) injectée, dans lequel on envoie la vapeur d'eau à la turbine (11) à vapeur et, par le générateur (12) raccordé à la turbine (11) à vapeur, on produit une puissance électrique et on commande de manière ciblée la réaction dans le réacteur (6) H₂-O₂ et la température de la vapeur à la sortie du réacteur (6) H₂-O₂ en injectant comme eau (31) de l'eau (14) d'alimentation sous haute pression du générateur (4) de vapeur à récupération de la chaleur perdue dans le réacteur (6) H₂-O₂ en passant par le conduit (19).

8. Procédé suivant la revendication 7, dans lequel le circuit de vapeur d'eau comprend un désurchauffeur (17), qui est constitué en échangeur de chaleur (18), que l'on monte du côté primaire dans le conduit pour la vapeur de la turbine (11) à vapeur, et un condenseur (24) monté en aval de la turbine (11) à vapeur, afin d'absorber de la chaleur et que l'on monte du côté secondaire dans le conduit (13), pour céder de la chaleur.

9. Procédé suivant l'une des revendications 7 ou 8, comprenant en outre un préchauffeur (20) de condensat, qui est monté en amont du générateur (4) de vapeur à récupération de la chaleur perdue et que l'on préchauffe par l'eau (13) d'alimentation, dans lequel pour augmenter le rendement on prélève de la vapeur d'eau d'une ou de plusieurs prises (21) sur la turbine (11) à vapeur et on l'envoie au préchauffeur (20) de condensat.

10. Procédé suivant l'une des revendications 7 à 9, dans lequel la pression d'évaporation dans le générateur (4) de vapeur à récupération de la chaleur perdue est réglée seulement si haute que, en fonction de la température de la vapeur vive réglée par la réaction H2-O2, on évite, même sans surchauffe intermédiaire, de l'humidité à la sortie de la turbine (11) à vapeur.

11. Procédé suivant l'une des revendications 7 à 10, comprenant en outre un surchauffeur (22) fonctionnant électriquement, qui est monté en amont du réacteur (6) H2-O2 et par lequel la température de vapeur vive de la vapeur peut, alors que le surchauffeur (22) ne fonctionne pas, être tant élevée que la présence d'humidité à la sortie de la turbine (11) à vapeur est empêchée.

12. Procédé suivant l'une des revendications 7 à 11, dans lequel le générateur (4) de vapeur à récupération de la chaleur perdue a des surfaces de chauffe, qui forment un premier évaporateur (25) et un deuxième évaporateur (26), et des surfaces (23) de chauffe, qui forment un premier surchauffeur (27), dans laquelle le premier surchauffeur (27) est monté entre les surfaces (23) de chauffe du premier évaporateur (25) et du deuxième évaporateur (26), de manière à empêcher un retard potentiel au démarrage de la turbine (2) à gaz.
